# EUROPÄISCHE PATENTSCHRIFT

(11) **EP 3 564 545 B1**
(45) Veröffentlichungstag und Bekanntmachung des Hinweises auf die Patenterteilung: **15.03.2023**
(21) Anmeldenummer: 19171239.7
(22) Anmeldetag: 26.04.2019
(51) Int. Cl.: F16B 37/06

(54) **ZUSAMMENBAUTEIL BESTEHEND AUS EINEM BAUTEIL UND EINEM ELEMENT MIT EINEM KOPFTEIL UND EINEM AUF EINER SEITE DES KOPFTEILS ANGEORDNETEN KRAGEN SOWIE HERSTELLUNGSVERFAHREN**
ASSEMBLY COMPOSED OF A COMPONENT AND AN ELEMENT WITH A HEAD AND A COLLAR MOUNTED ON ONE SIDE OF THE HEAD AND METHOD OF MANUFACTURE
COMPOSANT D'ASSEMBLAGE COMPRENANT UN COMPOSANT ET D'UN ÉLÉMENT DOTÉ D'UNE PARTIE DE TÊTE ET D'UN COL DISPOSÉ SUR UN CÔTÉ DE LA PARTIE DE TÊTE AINSI QUE SON PROCÉDÉ DE FABRICATION

(30) Priorität: 02.05.2018 DE 102018110475; 24.04.2019 DE 102019110635
(43) Veröffentlichungstag der Anmeldung: 06.11.2019
(73) Patentinhaber: Profil Verbindungstechnik GmbH & Co. KG, 61381 Friedrichsdorf (DE)
(72) Erfinder: Donhauser, Georg, 92224 Amberg (DE)
(74) Vertreter: Manitz Finsterwald Patent- und Rechtsanwaltspartnerschaft mbB

(56) Entgegenhaltungen:
- DE-A1- 1 906 189
- DE-A1-102005 007 203
- US-A- 1 579 875

## Beschreibung

Die vorliegende Erfindung betrifft ein Zusammenbauteil bestehend aus einem Bauteil und einem am Bauteil angebrachten als Verschiebeelement ausgebildeten Element, das ein Kopfteil, eine an einer Stirnseite des Kopfteils vorgesehene Bauteilanlagefläche und einen sich innerhalb der Bauteilanlagefläche angeordneten und einen von dieser wegragenden Kragen aufweist, der eine Querschnittsform hat, der nicht kreisrund ist. Ferner betrifft die Erfindung ein Verfahren zur Herstellung eines solchen Zusammenbauteils.

Ein Zusammenbauteil der eingangs genannten Art ist der US 2011/0211932 A1 zu entnehmen. Dort wird das Einpresselement selbststanzend in ein Blechteil eingebracht, d.h. das Einpresselement schneidet sein eigenes Loch im Blechteil und das Blechteil wird bei der Anbringung ans Blechteil so gestaucht, dass das Blechmaterial vollflächig in die zwischen dem polygonalen Kragen und dem Blechteil ausgebildete Hinterschneidung hineingedrückt wird, wodurch das Einpresselement verliersicher und ortsfest am Blechteil angebracht ist. Ein weiteres Blechteil kann dann an das erste Blechteil angebracht werden und zwar mittels Schrauben, die in die Einpresselemente im ersten Blechteil eingeschraubt werden. Ähnliche Zusammenbauteile gehen aus den weiteren Schriften US-A-6,220,804 und CA-A-2 448 716 sowie der DE-A-1906189 hervor. Der unmittelbar oben in diesem Absatz erwähnte Vorgang setzt voraus, dass die Löcher im weiteren Blechteil gut mit den Einpresselementen im ersten Blechteil ausgerichtet sind. Dies ist nicht immer einfach zu gewährleisten, weshalb man manchmal gerne von sogenannten Verschiebeelementen Gebrauch machen möchte. Bei solchen Verschiebeelementen sitzt das Mutterelement locker innerhalb eines Blechkäfigs, der am Blechteil angeschweißt wird, wobei ein Loch im Blechteil unterhalb des Mutterelements vorgesehen ist, das im Durchmesser deutlich größer ist als die Schrauben. Hierdurch kann das Einpresselement seitlich verschoben werden, um die notwendige Ausrichtung der Schrauben mit den Muttern sicherzustellen.

Der Vollständigkeithalber soll auch kurz auf das Zusammenbauteil gemäß dem US-Patent 1,579,875 verwiesen werden. Diese Schrift befasst sich mit einem Zusammenbauteil bestehend aus einem Befestigungselement und einem Blechteil bei dem das Blechteil in eine Nut hineinerstreckt, die zwischen einer Blechanlagefläche eines Kopfteils des Befestigungselements und einem sich konusförmig vom Kopfteil wegdivergierenden Kragen befindet. Das Blechteil ist zur Anlage gegen den Boden der Nut gebracht wodurch das Befestigungselement sich positionsfest im Blechteil befindet und nicht als Verschiebelement bezeichnet werden kann.

Hauptaufgabe der vorliegenden Erfindung ist es, ein Zusammenbauteil der eingangs genannten Art sowie ein geeignetes Element zur Anwendung im Zusammenbauteil und ein entsprechende Herstellungsverfahren vorzusehen, wobei das Element verschiebbar im Bauteil vorliegt und daher als Verschiebeelement betrachtet werden kann und zwar ohne das Element in einem Blechkäfig unterbringen zu müssen, wodurch der Blechkäfig und der entsprechende Anschweißvorgang, der ohnehin bei manchen Bauteilen wie solche aus Verbundblechen gar nicht möglich ist, entfallen können.

Diese Aufgabe wird erfindungsgemäß bei einem Zusammenbauteil der eingangs genannter Art dadurch gelöst, dass der Kragen mit Spiel in ein komplementär zur Querschnittsform geformtes Loch des Bauteils eingesetzt ist, dass der Kragen Außenflächen aufweist, die in Richtung der genannten Stirnseite des Kopfteils und in Bezug auf die mittlere Längsachse des Elements schräg zulaufen und mit dieser einen spitzen Winkel bilden, dass der der Bauteilanlagefläche benachbarte Randbereich des Loches des Bauteils sich in zwischen dem Kragen und der Stirnseite des Kopfteils ausgebildeten Kerben hineinerstreckt, aber auf den Grund der Kerben nicht reicht, wobei ein Freiraum entsteht, der eine seitliche Verschiebbarkeit des Elements relativ zum Bauteil gewährleistet, und dass eine axiale Trennung des Elements von dem Bauteil aufgrund von Materialüberlappung des Bauteilmaterials mit dem Kragen innerhalb der Kerben unterbunden ist.

In der vorliegenden Erfindung wird das Element vorzugsweise als Einpresselement realisiert, es könnte jedoch auch als Nietelement ausgelegt werden. In diesem Fall wird das freie Ende des Kragens so ausgebildet, dass es radial nach außen umgelegt werden kann, um ein Nietbördel auszubilden, zum Beispiel durch die Kräfte, die während der Anbringung auf das Bauteil ausgeübt werden. Falls das Element als Nietelement realisiert wird, dann muss die Auslegung so erfolgen wie im vorigen Absatz beschrieben ist. D.h. der Kragen wird auch hier mit Spiel in ein komplementär zur Querschnittsform geformtes Loch des Bauteils eingesetzt, der Kragen wird Außenflächen aufweisen, die in Richtung der genannten Stirnseite des Kopfteils und in Bezug auf die mittlere Längsachse des Elements schräg zulaufen und mit dieser einen spitzen Winkel bilden, der der Bauteilanlagefläche benachbarte Randbereich des Loches des Bauteils wird sich in zwischen dem Kragen und der Stirnseite des Kopfteils ausgebildeten Kerben hineinerstrecken, aber auf den Grund der Kerben nicht reichen, wobei ein Freiraum entsteht, der eine seitliche Verschiebbarkeit des Elements relativ zum Bauteil gewährleistet, und eine axiale Trennung des Elements von dem Bauteil aufgrund von Materialüberlappung des Bauteilmaterials mit dem Kragen bzw. dem radial nach außen verformten Kragen innerhalb der Kerben unterbunden ist.

Es bestehen mehrere Möglichkeiten, den Kragen des Elements bzw. das Loch im Bauteil mit einem nicht kreisrunden Querschnitt zu versehen. Besonders günstig ist es, wenn der Kragen eine zumindest im Wesentlichen polygonale Querschnittsform aufweist, wobei die polygonale Querschnittsform des Kragens und dementsprechend das polygonale Loch des Bauteils aus der Gruppe dreieckig, quadratisch, fünfeckig und hexagonal ausgewählt ist. Bevorzugterweise ist die Querschnittsform des Kragens und des Loches quadratisch, insbesondere mit gerundeten Ecken ausgebildet. Die quadratische Form ermöglicht es, einen ausgezeichneten Verschiebeweg in zwei zueinander rechtwinkelige Richtungen bezogen auf die lokale Ebene des Bauteils im Bereich der Anbringung des Elements zu erreichen und die gerundeten Ecken sorgen dafür, dass die Gefahr von Ermüdungsrissen in den Eckbereichen des Loches im Bauteil deutlich herabgesetzt werden kann. Darüber hinaus können so gute Verdrehsicherungseigenschaften gesichert werden, damit das Element aus dem Bauteil nur unter Anwendung zerstörerischer Kräfte herausgedreht werden kann.

Solche Formgebungen, die alle im Prinzip aus der eingangs genannten US 2011/0211932 A1 bekannt sind, stellen sicher, dass eine ausreichende Verdrehsicherheit erreicht werden kann, die beim Vorsehen von einer noch größeren Anzahl von Seitenflächen zunehmend abnimmt. Der entscheidende Unterschied ist aber, dass bei der US 2011/0211932 A1 der Kragen mit dem Bauteilmaterial im Sinne eines Würgegriffs fest umschlossen ist, wie auch bei anderen dem Stand der Technik zugehörigen Schriften.

Eine weitere alternative Querschnittsform besteht darin, dass der Kragen eine ovale bzw. elliptische Gestalt. Auch käme eine Querschnittsform des Kragens bzw. des Loches ähnlich wie ein Eisbehälter mit einem quadratischen oder rechteckigen Mittelbereich mit halbkreisförmigen Ansätzen an zwei sich gegenüberliegenden Seiten des Mittelbereiches in Frage. Auch solche Querschnittsformen, d.h. elliptische Querschnittsform oder eisbecherförmige Querschnittsform ermöglichen gute Verschiebewege mit herabgesetzter Ermüdungsgefahr und ausgezeichneten Verdrehsicherungseigenschaften.

Dadurch, dass das polygonale Loch in dem Bauteil bzw. im Blechteil vorgefertigt wird, kann es so groß gemacht werden, dass der polygonale Kragen an seiner freien Stirnseite, die die größten Querabmessungen aufweist, mit Spiel in das polygonale Loch eingesetzt werden kann. Durch eine gezielte Stauchung des Bauteils bzw. des Blechteils kann Bauteilmaterial bzw. Blechmaterial in dem Randbereich der Öffnung des polygonalen Loches auf der der Bauteilanlagefläche des Kopfes zugewandten Seite in die sich zwischen den schräg zulaufenden Außenflächen des Kragens und den Bauteilanlagefläche des Kopfteils bzw. der Blechanlagefläche des Elements gebildeten Kerben hineingedrückt werden, derart, dass es das Material den Kragen in radialer Richtung überlappt, und somit ein Herausziehen des Elements aus der Tafel bzw. dem Blechteil verhindert, jedoch nicht so weit in radialer Richtung in die Kerben hineindrückt, dass das Element seitlich festgehalten wird, sondern so, dass ein seitlicher Abstand zu den Böden der Kerben noch existiert, wobei ein Freiraum entsteht und die seitliche Verschiebbarkeit des Elements noch gegeben ist und zwar vorzugsweise in allen seitlichen Richtungen. Die gleichen Vorteile sind mit einer elliptischen oder eisbecherähnlichen Querschnittsform des Kragens bzw. des Loches mittels einer gezielten Stauchung des Bauteils bzw. des Blechteils zu erreichen.

Es werden vorzugsweise bei dem Element keine Verdrehsicherungsmerkmale in Form von vorstehenden Nasen oder Rippen oder entsprechenden Vertiefungen vorgesehen, die die Verschiebbarkeit des Elements verhindern könnten, da es erfindungsgemäß anerkannt worden ist, dass die erforderliche Verdrehsicherung im ausreichenden Maße und ausschließlich durch die polygonale Form des Loches und die des Kragens gewährleistet werden kann, und zwar auch dann, wenn eine gewisse gegenseitige Verdrehbarkeit des Elements und des Bauteils bzw. des Blechteils aufgrund der radialen Verschiebbarkeit unvermeidlich ist. Das Gleiche gilt für eine elliptische oder eisbecherähnliche Querschnittsform des Kragens bzw. des Loches.

Der spitze Winkel zwischen den Außenflächen des Kragens und der mittleren Längsachse des Elements liegt vorzugsweise im Bereich von etwa 20° bis etwa 40°. Ein zu kleiner Winkel schränkt die radiale Verschiebbarkeit des Elements ein und setzt die Auspresssicherheit ab, während ein zu großer Winkel die erwünschte direkte Klemmung des weiteren Blechteils schwieriger zu erreichen macht, ohne dass das Kopfteil des Elements und das Kopfteil des Schraubelements unerwünscht vergrößert werden müssen. Wenn hierin gesagt wird, dass eine Form zumindest im Wesentlichen polygonal ist, bedeutet dies, dass die Ecken zwischen benachbarten Seitenflächen gerundet sein können, was dem Ermüdungsverhalten des Zusammenbauteils zu Gute kommt.

Auch der Kopfteil des Elements wird vorzugsweise im Querschnitt polygonal gestaltet und zwar mit der gleichen Anzahl von Seitenflächen wie der im Querschnitt polygonale Kragen. Dies vereinfacht die Herstellung des Elements durch zum Beispiel ein Kaltschlagverfahren und sorgt dafür, dass die Blauteilanflagefläche eine gleichmäßige Ausbildung aufweist. Alternativ hierzu könnte man aber zum Beispiel eine Kopfform verwenden, die bei einem Kragen mit einer elliptischen oder eisbecherähnlichen Querschnittsform eine entsprechende Querschnittsform aufweist, oder es könnte bei allen Varianten des Kragens eine Kopfform gewählt werden, die im Querschnitt kreisrund ist. Auf jeden Fall kann der Kopfteil in Seitenansicht ballig gerundet sein, eine Formgebung, die leicht durch ein Kaltschlagverfahren realisiert werden kann. Ferner können Elemente mit einer derartigen Formgebung auch in bekannten Setzköpfen der Anmelderin, die bei deren Kunden stehen, kostensparend verarbeitet werden.

Eine Möglichkeit, das Bauteilmaterial im Randbereich des polygonalen Loches radial zu verschieben, besteht darin, die dem polygonalen Kragen zugewandte Seite des Kopfteils mindestens an den Stellen der Seitenflächen des polygonalen Kragens mit vorstehenden Verdrängungsflächen zu versehen, die bei Abstützung des Bauteils auf einer ebenen Fläche oder auf einer Matrize mit einer flachen Stirnseite und bei der Ausübung von Druck auf das Kopfteil des Elements dazu dienen, die erwünschte Verdrängung des Bauteilmaterials zu bewirken, wobei das Ausmaß der radialen Verdrängung des Bauteilmaterials durch das Volumen der vorstehenden Verdrängungsflächen bestimmt wird. Das Volumen der vorstehenden Verdrängungsflächen wird durch die radiale und umfangsmäßige Erstreckung sowie die axiale Höhe derselben bestimmt. Dabei soll die axiale Höhe möglichst klein gehalten werden, da dies zu einer axialen Vertiefung in der der Bauteilanlagefläche des Kopfteils gegenüberliegenden Seite des Bauteils führt, die die radiale Verschiebbarkeit des Elements verhindern bzw. ungünstig beeinflussen kann. Entsprechende Verdrängungsflächen können auf der Bauteilanlagefläche eines Elements mit einer anderen Querschnittsform, Z.B. mit einer elliptischen oder eisbecherähnlicher Querschnittsform vorgesehen werden.

Das erfindungsgemäße Element kann entweder als Mutterelement ausgebildet sein und eine mittlere Längspassage aufweisen oder als Bolzenelement mit einem vom Kragen aus in Richtung vom Kopfteil weg erstreckenden Schaftteil.

Die mittlere Längspassage des Mutterelements kann mit einem Gewindezylinder versehen werden oder eine glatte zylindrische Bohrung aufweisen, die mittels einer gewindeschneidenden oder-formenden Schraube zu einem Gewindezylinder umgeformt werden kann.

Alternativ hierzu kann das Zusammenbauteil so ausgebildet werden, dass die genannte Seite des Kopfteils, d.h. die Bauteilanlagefläche in einer Ebene senkrecht zur mittleren Längsachse des Elements liegt, und die Verdrängung des Bauteilmaterials anderweitig erfolgt.

Dies kann zum Beispiel erfindungsgemäß dadurch geschehen, dass eine Ringvertiefung in der der Bauteilanlagefläche des Kopfteils abgewandten Seite des Bauteils um das polygonale Loch herum, vorgesehen ist, oder dadurch, dass diskrete Vertiefungen, die in einem Ring in der der Bauteilanlagefläche des Kopfteils abgewandten Seite des Bauteils um das polygonale Loch herum angeordnet sind, vorgesehen sind, die für die Verdrängung des Bauteilmaterials in die Kerben verantwortlich ist bzw. sind.

Ein erfindungsgemäßes Verfahren zur Herstellung eines oben beschriebenen erfindungsgemäßen Zusammenbauteils kann so ausgelegt werden, dass ein nicht kreisrundes Loch in dem Bauteil vorgefertigt wird mit Querabmessungen größer als die entsprechenden maximalen Querabmessungen des Kragens im Bereich seiner freien Stirnseite, damit dieser in das nicht kreisrunde Loch hineingeführt werden kann, dass das Tafelmaterial aus dem Randbereich des nicht kreisrunden Loches in die sich zwischen den Seitenflächen des Kragens und der Bauteilanlagefläche des Kopfteils ausgebildeten Kerben verdrängt wird; wobei das Tafelmaterial nicht soweit verdrängt wird, dass es auf den Grund der Kerben reicht, wobei die seitliche Verschiebbarkeit des Elements relativ zum Bauteil gewährleistet ist, aber nur so weit, dass eine axiale Trennung dass Elements von dem Bauteil aufgrund der Materialüberlappung des Tafelmaterials mit dem nicht kreisrunden Kragen innerhalb der Kerben unterbunden ist.

In einer konkreten erfindungsgemäß bevorzugten Ausführung des oben beschriebenen Verfahrens wird das vorgefertigte nicht kreisrunde Loch des Bauteils mit einem erhabenen Randbereich auf der der Bauteilanlagefläche des Kopfteils zugewandte Seite versehen, wobei beim Einführen des Kragens in das Bauteil der erhobene Randbereich durch die Bauteilanlagefläche des Kopfteils bei gleichzeitiger Abstützung der dem Kopfteil abgewandten Seite des Bauteils flachgepresst wird, um hierdurch das Verdrängen des Bauteilmaterials im Randbereich zu bewirken.

In einer alternativen Auslegung des erfindungsgemäßen Verfahrens wird der Randbereich des vorgefertigten Lochs des Bauteils, der im Bereich der Anbringung des Elements in einer Ebene liegt, mittels Verdrängungsflächen, die an der Bauteilanlagefläche des Kopfteils mindestens im Bereich der Seitenflächen des Kragens vorgesehen sind, beim Einführen des Kragens in das Bauteil und durch die Bauteilanlagefläche des Kopfteils bei gleichzeitiger Abstützung der Unterseite des Bauteils eingedrückt, um hierdurch das Verdrängen des Bauteilmaterials im Randbereich in die Kerben hinein, zu bewirken.

In einer weiteren alternativen Auslegung des erfindungsgemäßen Verfahrens, wird mittels einer Matrize, die mit einer Ringerhebung oder mit diskreten, in einem Ring angeordneten Vorsprüngen versehen ist, die der Bauteilanlagefläche des Kopfteils abgewandten Seite der Tafel um das polygonale Loch herum mit einer Ringvertiefung bzw. mit diskreten Vertiefungen, die in einem Ring angeordnet sind, versehen, die für die Verdrängung des Bauteilmaterials in die Kerben verantwortlich ist bzw. sind.

Besonders günstig ist es, wenn ein Verfahren zur Herstellung eines erfindungsgemäßen Zusammenbauteils nach mindestens einem der entsprechenden Patentansprüche 1 bis 10 verwendet wird, bei dem durch die Ausübung von Druck auf den Kopfteil des Elements und bei gleichzeitiger Abstützung des Bauteils auf einer Lochmatrize mit einer mittleren Öffnung, die freie Stirnseite des Kragens benutzt wird, um ein nicht kreisrundes Loch in das Bauteil zu stanzen. D.h. das Element wird selbststanzend in das Bauteil eingesetzt, wodurch das erfindungsgemäße Verfahren einstufig und daher besonders wirtschaftlich zeitsparend durchgeführt werden kann. Ferner können auf diese Weise Probleme mit der Ausrichtung des Elements bzw. dessen Kragen und dem Bauteil vermieden werden, da der Kragen sein eigenes formangepasstes Loch in das Bauteil schneidet und die konkrete Orientierung des Kragens um die mittlere Längsachse des Bauteils herum völlig unwichtig ist. Dabei kann die Stauchung des Bauteilmaterials nach einer der oben beschriebenen Arten erfolgen.

Besonders günstig bei dem zuletzt genannten Verfahren ist es, wenn das nicht kreisrunde Loch der Matrize mit Querabmessungen etwas größer als die entsprechenden Querabmessungen der freien Stirnseite des Kragens versehen wird, damit die entstehenden Seitenwänden des so gestanzten Loches des Bauteils in Richtung der mittleren Längsachse des Elements und in Richtung vom Kopfteil weg zumindest im dem Kopfteil abgewandten Bereich divergierend ausgebildet sind. Hierdurch kann eine deutliche Erhöhung des Verschiebewegs erreicht werden.

Die Erfindung wird nachfolgend anhand von Ausführungsbeispielen, die in den Figuren gezeigt sind, näher erläutert. In den Figuren zeigen:
- Fig. 1A bis 1C: ein erfindungsgemäßes Einpresselement in der Form eines Mutterelements und zwar in einer perspektivischen Ansicht (Fig. 1A), in einer Ansicht, die in einer Ebene auf der linken Seite der mittleren Längsachse geschnitten und in Seitenansicht auf der rechten Seite der mittleren Längsachse gezeigt ist (Fig. 1B) sowie zur Hälfte in einer Draufsicht von unten (Fig. 1C),
- Fig. 2A und 2B: zwei Zeichnungen, die das Einbringen des Einpresselements gemäß den Fig. 1A bis 1C in ein Blechteil zeigen,
- Fig. 3A bis 3C: Ansichten entsprechend den Ansichten gemäß den Figuren 1A bis 1C, jedoch von einem modifizierten erfindungsgemäßen Einpresselement auch in Form eines Mutterelements, aber mit Verdrängungsflächen auf dem Kopfteil.
- Fig. 4A und 4B: zwei Zeichnungen, die das Einbringen des Einpresselements gemäß den Fig. 3A bis 3C in ein Blechteil zeigen,
- Fig. 5A und 5B: zwei Zeichnungen, die ein alternatives Verfahren zur Einbringung des Einpresselements gemäß den Fig. 1A bis 1C in ein Blechteil zeigen,
- Fig. 6A bis 6C: Ansichten entsprechend den Ansichten gemäß den Figuren 1A bis 1C, jedoch von einem modifizierten erfindungsgemäßen Einpresselement in Form eines Bolzenelements,
- Fig. 7A und 7B: zwei Zeichnungen, die das Einbringen des Einpresselements gemäß den Fig. 6A bis 6C in ein Blechteil zeigen,
- Fig. 8A und 8B: Zeichnungen, um mögliche weitere Querschnittsformen eines Einpresselements und dementsprechend die Querschnittsform eines nicht kreisrunden Loches eines Bauteils zu verdeutlichen und
- Fig. 9: eine schematische Zeichnung, um die selbststanzende Einbringung eines erfindungsgemäßen Einpresselements zu verdeutlichen.

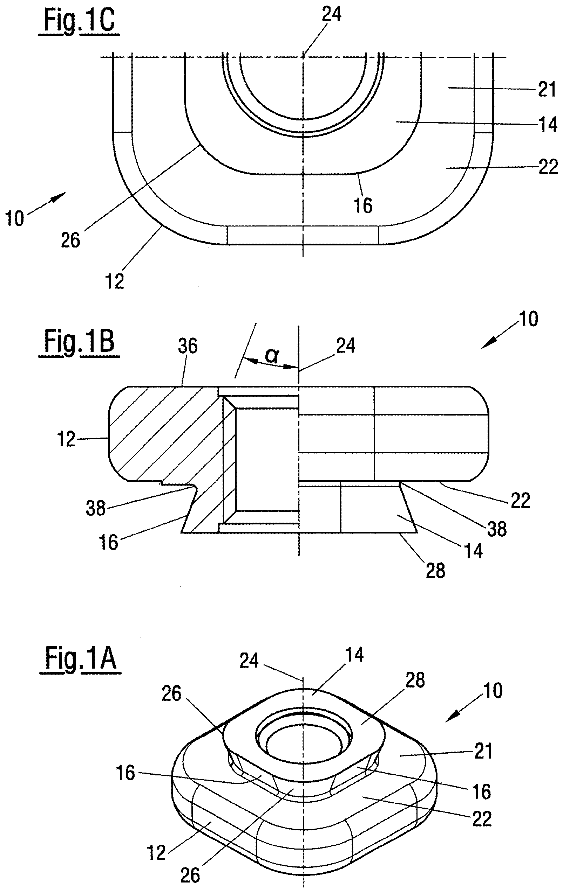

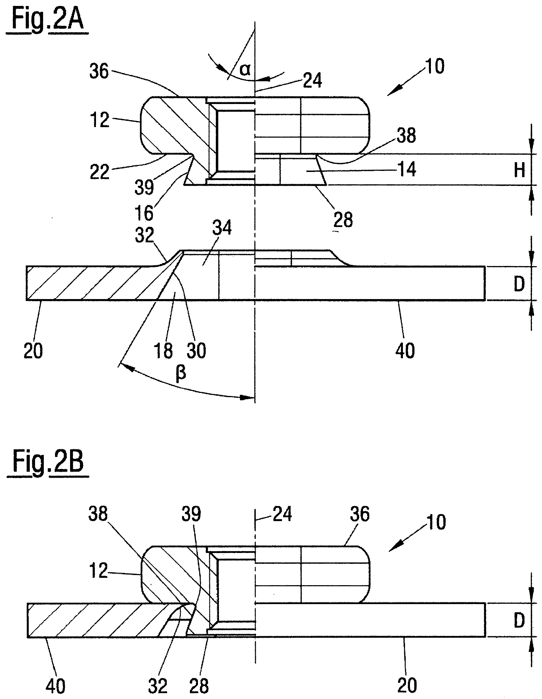

Bezug nehmend auf die Fig. 1A bis 1C sowie die Fig. 2A und 2B wird dort ein Einpresselement 10 mit einem Kopfteil 12 und einem auf einer Seite des Kopfteils angeordneten, im Querschnitt zumindest im Wesentlichen polygonalen Kragen 14 gezeigt. Zur Bildung eines Verschiebeelements sind die Außenflächen 16 des polygonalen Kragens 14, der zum Einsetzen in ein entsprechend vorgefertigtes polygonales Loch 18 einer Tafel 20 ausgebildet ist, das beispielsweise in der Fig. 2A gezeigt ist, so ausgeführt, dass sie mit in Richtung der Unterseite 22 des Kopfteils 12 und in Bezug auf die mittlere Längsachse 24 des Einpresselements 10 schräg zulaufen und mit dieser einen spitzen Winkel α bilden. Die Unterseite 22 des Kopfteils 12 bildet in diesem Beispiel die Bauteil- bzw. Blechanlagefläche 21 des Einpresselements 10. Die axiale Höhe H des Kragens 14 soll vorzugsweise die Dicke D der Tafel 20 im Bereich der Anbringung des Einpresselements 10 nicht übersteigen. Die Seite 22 des Kopfteils 12 liegt vorzugsweise in einer Ebene senkrecht zur mittleren Längsachse 24 des Einpresselements 10.

Der spitze Winkel α liegt vorzugsweise im Bereich von etwa 20° bis etwa 40°.

In allen gezeigten Beispielen ist der Querschnitt des Kragens 14 und das polygonale Loch 18 quadratisch mit gerundeten Ecken 26 gezeigt. Der Querschnitt des Kragens 14 und die Formgebung des Loches 18 sind gleich, müssen aber nicht unbedingt quadratisch sein. Der zumindest im Wesentlichen polygonale Querschnitt des Kragens 14 und dementsprechend das polygonale Loch 18 in der Tafel 20 können zum Beispiel aus der Gruppe dreieckig, quadratisch, fünfeckig und hexagonal oder oval ausgewählt werden, wie beispielsweise aus der US 2011/0211932 A1 bekannt ist.

In allen hier gezeigten Beispielen ist auch das Kopfteil 12 im Querschnitt polygonal und zwar mit der gleichen polygonalen Form wie der Kragen 14.

Die Fig. 2A und 2B zeigen das bevorzugte Verfahren, um das Einpresselement 10 an die Tafel 20 anzubringen. Das polygonale Loch 18 wird zunächst in einer getrennten Operation in der Tafel vorgefertigt und zwar mit Querabmessungen größer als die maximalen Querabmessungen des polygonalen Kragens 14 im Bereich seiner freien Stirnseite 28, damit dieser in das polygonale Loch hineingeführt werden kann. Die Fertigung des Loches 18 kann beispielsweise getrennt von der Anbringung des Einpresselements in einer Presse durchgeführt werden, die in einer anderen Fabrik oder in einem anderen Gebäude oder an einer anderen Stelle im gleichen Gebäude steht, wo das Einpressen des Einpresselements erfolgt. Das Einsetzen bzw. Einpressen des Einpresselements 10 kann selbst in einer Presse erfolgen oder mittels eines Roboters oder unter Anwendung einer Zange, insbesondere einer motorbetriebenen Zange, durchgeführt werden. Alternativ hierzu kann die Ausbildung des polygonalen Lochs in der gleichen Presse erfolgen wie das Einsetzen des Einpresselements. Dies wird normalerweise dadurch erreicht, das ein Folgeverbundwerkzeug (nicht gezeigt) in der Presse zum Einsatz kommt.

Bei der Anwendung eines Folgeverbundwerkzeugs wird das polygonale Loch 18 in einer Station eines Folgeverbundwerkzeugs (nicht gezeigt) durchgeführt, während das Einführen des Einpresselements in einer weiteren Station des Folgeverbundwerkzeugs durchgeführt wird. Für jeden Hub der Presse wird ein polygonales Loch in einer Station des Folgeverbundwerkzeugs ausgestanzt, und in einer weiteren Station ein Einpresselement in das polygonale Loch eingesetzt, das in einem früheren Arbeitshub der Presse hergestellt wurde. Wie an sich gut bekannt ist, werden nach jedem Hub der Presse die Werkstücke, d.h. entweder einzelne Bauteile 20 oder ein Streifen aus mehreren zunächst zusammenhängenden Werkstücken bzw. Bauteilen 20 (Tafel), um eine vorgegebene Distanz innerhalb des Folgeverbundwerkzeugs weitertransportiert.

Wie aus der Fig. 2A ersichtlich, wird das Vorlochen des Blechteils so vorgenommen, dass das Loch 18 schräg angeordnete Seitenflächen 30 aufweist, die mit der mittleren Längsachse ebenfalls einen spitzen Winkel β bilden und in Richtung des Kopfteils 12 gehend konvergieren, wobei β gleich wie α oder abweichend davon gewählt werden kann. Ferner kann β auch gleich 0° gewählt werden. Das vorgefertigte Loch 18 ist von einer vorstehenden Lippe 32, d.h. von einem erhabenen Ringbereich umgeben, die bei der Fertigung des polygonalen Loches 18 mittels einer entsprechend geformten Matrize (nicht gezeigt) erzeugt werden kann. Die radial innere Flanke 34 der Lippe 32 setzt in diesem Beispiel die schräg gestellten Seitenflächen 30 mit dem gleichen Winkel β fort. Die Querabmessungen des Loches 18 an der engsten Stelle, d.h. oben in Fig. 2A sind im Vergleich zu den maximalen Querabmessungen des Kragens 14, d.h. unten in Fig. 2A, geringfügig größer bemessen, so dass der Kragen 14 vorzugsweise zumindest im Wesentlichen spielfrei in das vorgefertigte Loch 18 eingefügt werden kann. Danach wird durch die Ausübung von Druck auf der oberen Stirnseite 36 des Kopfteils 12 bei gleichzeitiger Abstützung des Blechteils 20 auf einer ebenen Fläche eines Werkzeugs oder der ebenen Fläche einer Matrize die Lippe 32 in die in Fig. 2B gezeigte Form 32' flachgepresst, wodurch das Blechmaterial der Lippe 32 in die Kerben 38 zwischen den Seitenflächen 16 des Kragens 14 und der Unterseite 22 des Kopfteils verdrängt wird. Das Tafelmaterial wird aber nicht so weit verdrängt, dass es auf den Grund 39 der Kerben reicht, sondern es verbleibt ein Freiraum 41 zwischen den flach gepressten Lippen 32' und dem Grund 39 der Kerben 38. Hierdurch ist die seitliche Verschiebbarkeit des Einpresselements 10 relativ zur Tafel 20 gewährleistet. Die Verdrängung erfolgt jedoch so weit, dass eine axiale Trennung des Einpresselements 10 von der Tafel 20 aufgrund der Materialüberlappung des Tafelmaterials bzw. der Lippe 32' mit dem polygonalen Kragen 14 innerhalb der Kerben 38 unterbunden ist. Mit dem Ausdruck Materialüberlappung ist hier gemeint, dass die kleinsten Querabmessungen des Loches 18, hier im Bereich der Oberseite der flachgepressten Lippe 32', kleiner sind als die maximalen Querabmessungen des nicht verformten Kragens 14, wodurch ein Herausziehen des Mutterelements 10 aus dem Blechteil 20 oder ein Herauspressen des Mutterelements 19 aus dem Blechteil 20 unterbunden ist bzw. nur mit verformenden Kräften möglich ist. Eine Bewegung des Einpresselements weiter nach unten in Fig. 2B ist deshalb nicht möglich, da die Bauteilanlagefläche 21, die größer ist als das Loch 182, eine solche Bewegung verhindert.

Man sieht auch aus der Fig. 2B, dass die freie Stirnseite 28 des Kragens 14 im eingebauten Zustand des Einpresselements maximal nur bis zur Unterseite 40 des Blechteils 20 reicht und vorzugsweise geringfügig vor der Unterseite 40 des Blechteils 20 steht, bspw. um 0,02mm. Hierdurch wird zunächst die erwünschte direkte Klemmung zwischen dem Blechteil 20 und einem weiteren Blechteil oder einem Gehäuse erreicht, das an das Blechteil 20 mittels eines in das Mutterelement eingeschraubten Bolzens (nicht gezeigt) erfolgt. Ferner wird verhindert, dass das weitere Bauteil beweglich gegenüber dem Blechteil 20 gehalten wird, was der Fall wäre, wenn die axiale Höhe des Kragens 14 größer wäre als die Dicke des Blechteils 20. Zwar wäre es möglich, wenn die axiale Höhe des Kragens 14 größer sein sollte als die Dicke des Blechteils 20, die entsprechenden Nachteile durch eine besonders geformte Scheibe zu überwinden. Dies stellt aber eine wesentliche Komplikation dar, da ein extra Teil erforderlich wäre. Ferner müsste der Kopfteil 12 des Einpresselements 10 und des Anschraubelements unter Umständen größer gemacht werden als sonst notwendig wäre.

Schließlich sieht man aus den Fig. 2A und 2B, dass keine Verformung des Einpresselements 10 erfolgt, weshalb die Bezeichnung "Einpresselement" gerechtfertigt ist, da im Gegenteil zu einem Nietelement, bei dessen Anbringung eine absichtliche Umformung des Nietelements eintritt, eben keine Verformung erwünscht ist.

Besonders günstig bei dieser Ausführung ist, dass im eingebauten Zustand der Fig. 2B die Oberseite des Blechteils 20 in einer Ebene liegt und somit die Verschiebbarkeit des Einpresselements nicht behindert.

Obwohl bei einem Verschiebeelement an sich gewünscht ist, dass das Einpresselement 10 unverlierbar am Blechteil 20 befestigt ist, bevor ein weiteres Bauteil angeschraubt wird, weshalb in der Ausführung gemäß Fig. 2B die Lippe 32 flachgepresst wird, um die oben erwähnte Materialüberlappung vor dem Anbringen des weiteren Bauteils und daher auch ein transportfähiges Zusammenbauteil zu erzeugen, ist dies nicht zwingend erforderlich. Es wäre bspw. denkbar, dass die Lippe 32 erst bei dem Anschrauben des weiteren Bauteils durch die Kraft des entsprechenden Schraubbolzens flachgepresst wird.

Aus dem oben Gesagten geht hervor, dass das vorgefertigte polygonale Loch 18 der Tafel 20 mit einem erhobenen Randbereich (Lippe) 32 auf der der Bauteilanlagefläche 21 des Kopfteils 12 zugewandten Seite 46 versehen ist, und beim Einführen des Kragens 14 in die Tafel 20 der erhobene Randbereich 32 (d.h. die Lippe 32) durch die genannte Seite 22 des Kopfteils bei gleichzeitiger Abstützung der Unterseite 40 der Tafel 20 flachgepresst bzw. gestaucht wird, um hierdurch das Verdrängen des Tafelmaterials im Randbereich zu bewirken.

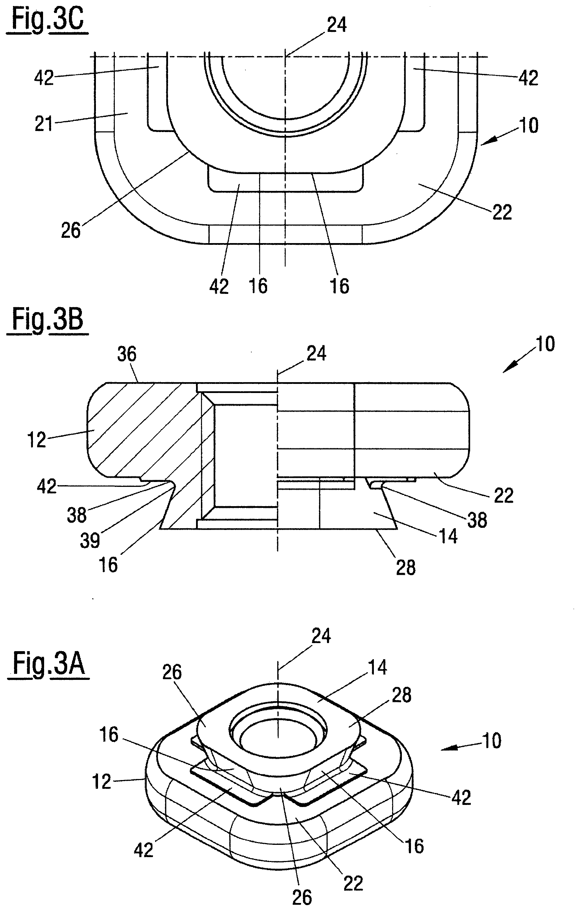

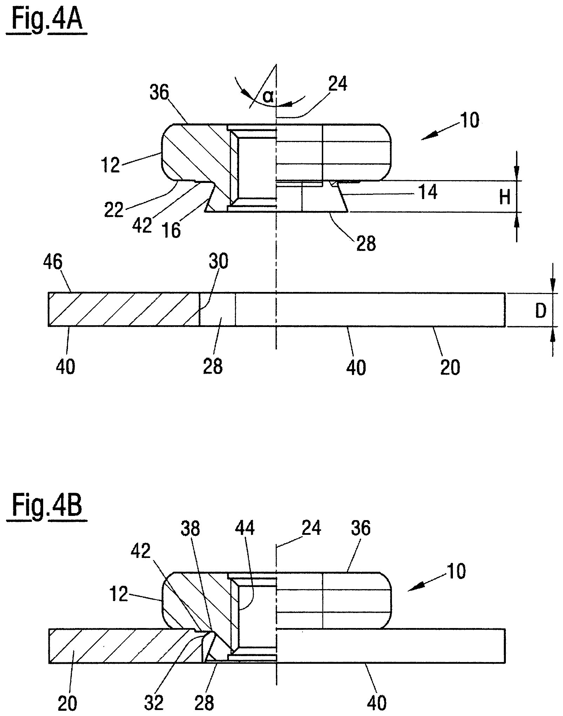

Eine alternative Auslegung des Einpresselements 10 und des Verfahrens zum Anbringen des Einpresselements in das Blechteil 20 wird nun anhand der Fig. 3A bis 3C, 4A und 4B erläutert. Teile oder Merkmale, die die gleiche Formgebung oder Funktion haben wie die bisherige Ausführung gemäß den Fig. 1A bis 1C und 2A und 2B, werden mit den gleichen Bezugszeichen versehen und es versteht sich, dass für diese Bezugszeichen die gleiche Beschreibung gilt wie bisher, es sei denn etwas Gegenteiliges gesagt wird. Diese Konvention gilt auch für die weiteren Ausführungsformen und lediglich Teile oder Merkmale, die in ihrer Form oder Funktion von den bisherigen Teilen bzw. Merkmalen abweichen, werden extra beschrieben.

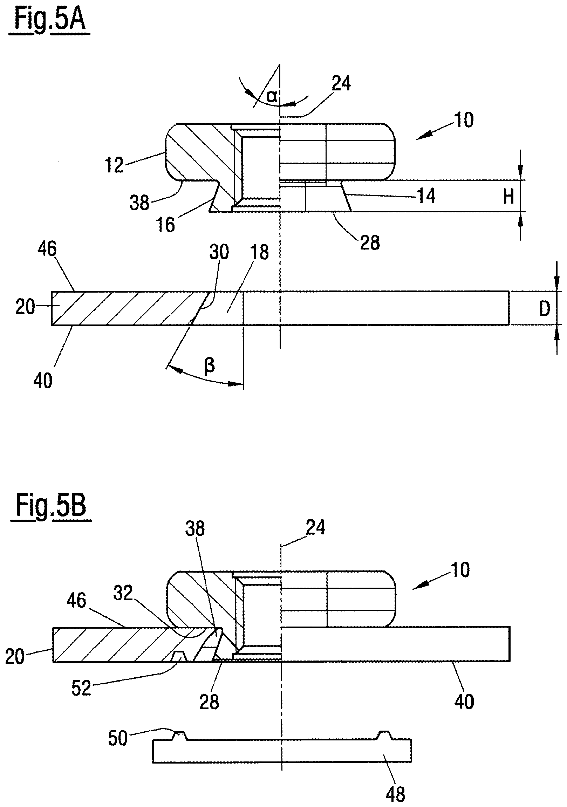

Bei der Ausführung gemäß den Fig. 3A bis 3C, 4A und 4B weicht das Einpresselement 10 vom bisherigen Element lediglich dadurch ab, dass die dem polygonalen Kragen 14 zugewandte Seite 22 des Kopfteils mindestens an den Stellen der Seitenflächen 16 des polygonalen Kragens 14 vorstehende Verdrängungsflächen 42 aufweist, die zum Verdrängen von Tafelmaterial im Randbereich des polygonalen Loches 18 vorgesehen sind, wobei das verdrängte Tafelmaterial in die zwischen den Seitenflächen 16 des polygonalen Kragens 14 und der Seite 22 des Kopfteils 12 bzw. den Verdrängungsflächen 42 gebildeten Kerben 38 radial hinein fließt und eine axiale Trennung des Einpresselements 10 und der Tafel 20 bzw. des Blechteils verhindert. Ein weiterer Unterschied zu der Ausführung gemäß Fig. 2A und 2B ist darin zu sehen, dass in Fig. 4A und Fig. 4B die Seitenwände 30 des polygonalen Loches 18 hier senkrecht zu der Oberseite 46 und der Unterseite 40 des Blechteils 20 stehen, d.h. der Winkel β ist gleich Null. Dennoch reicht die Verdrängung des Blechmaterials im Bereich um das polygonale Loch 18 herum aus, um die Lippe 32' zu bilden und die oben erwähnte Materialüberlappung sicherzustellen. Auch hier kann die Lippe 32' durch die Ausübung von Druck auf die obere Stirnseite 36 des Kopfteils des Einpresselementes 10 bei gleichzeitiger Abstützung des Blechteils 20 an seiner Unterseite 40 ausgebildet werden, was den Nachteil hat, dass der Abdruck der Verdrängungsflächen 42 in der Oberseite des Blechteils der einfachen radialen Verschiebbarkeit des Einpresselements hinderlich sein können, dennoch aber nicht gänzlich verhindern, zumal das Einpresselement auch eine gewisse axiale Verschiebbarkeit besitzt. Auch hier ist es allerdings nicht zwingend erforderlich, das Einpresselement unverlierbar am Blechteil 20 anzubringen, bevor das weitere Bauteil (nicht gezeigt) angebracht wird. Auch hier könnte die Verdrängung des Blechmaterials durch die Verdrängungsflächen 42 erst bei dem Anschrauben des weiteren Blechteils durch die Kraft der entsprechenden Schraube bewirkt werden, die in das Innengewinde 44 des weiblichen Einpresselements 10 eingeschraubt wird. Bis die Verdrängung des Blechmaterials erfolgt ist und der Abdruck der Verdrängungsflächen 42 ausgebildet ist, ist die seitliche Verschiebbarkeit des Einpresselements im vollem Maß gegeben. Ggf. können auch bei dieser Ausführungsform die Seitenflächen 30 des polygonalen Loches mit einem spitzen Winkel β zu der mittleren Längsachse und in Richtung des Kopfteils 12 des Einpresselements 10 konvergierend angeordnet werden (wie im Beispiel gemäß den Fig. 5A und 5B gezeigt ist).

In der Ausführung gemäß den Fig. 5A und 5B sind die Seitenflächen 30 des polygonalen Loches 18 mit einem spitzen Winkel β zu der mittleren Längsachse und in Richtung des Kopfteils 12 des Einpresselements 10 konvergierend angeordnet, wobei die Oberseite 46 des Blechteils 20 in einer Ebene liegt, wenigstens im Bereich der Anbringung des Einpresselements 10. In diesem Beispiel wird die Lippe 32' durch die Verdrängung vom Blechmaterial an der Unterseite 40 des Blechteils 20 erzeugt. Wie in der Fig. 5B angedeutet, erfolgt dies durch eine Matrize 48 mit einer ringförmigen Erhebung 50, die eine entsprechend geformte ringförmige Vertiefung 52 in der Unterseite des Blechteils 20 erzeugt. Anstelle einer ringförmigen Vertiefung 52 könnten auch diskrete Vertiefungen, die in einem Ring in der Unterseite 40 des Blechteils 20 um das polygonale Loch 18 herum angeordnet sind, verwendet werden. Dann muss die Matrize 48 entsprechende diskrete Vorsprünge aufweisen (nicht gezeigt aber in der Form entsprechend dem Querschnitt der ringförmigen Erhebung 50), die für die Verdrängung des Tafelmaterials bei 32' in die Kerben 38 verantwortlich sind. Diese Verdrängung erfolgt, wenn das Blechteil zwischen der Fläche 22 des Kopfteils und der Matrize 48 durch Druck auf die obere Stirnseite 36 des Kopfteils, bspw. in einer Presse, gequetscht wird.

In allen bisherigen Ausführungsformen ist das Einpresselement als Mutterelement mit einem mittig angeordneten Gewindezylinder bzw. Innengewinde 44 realisiert worden.

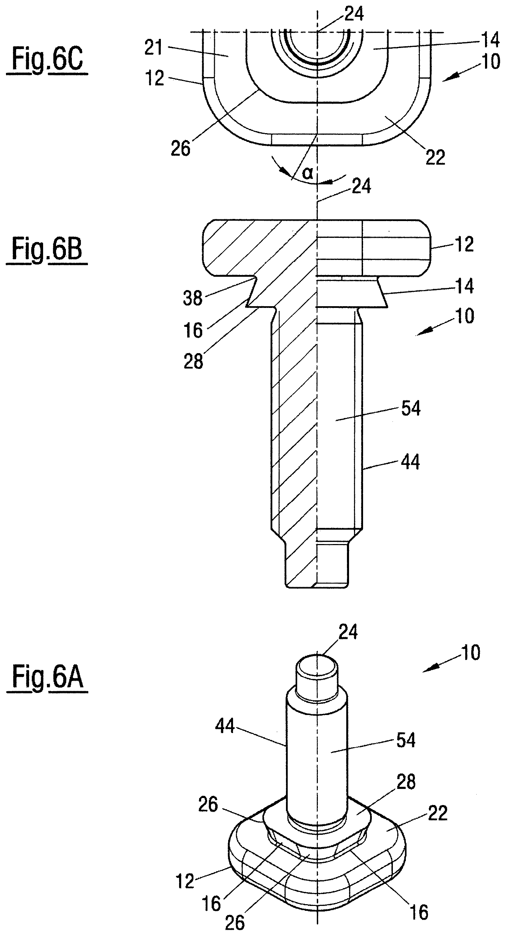

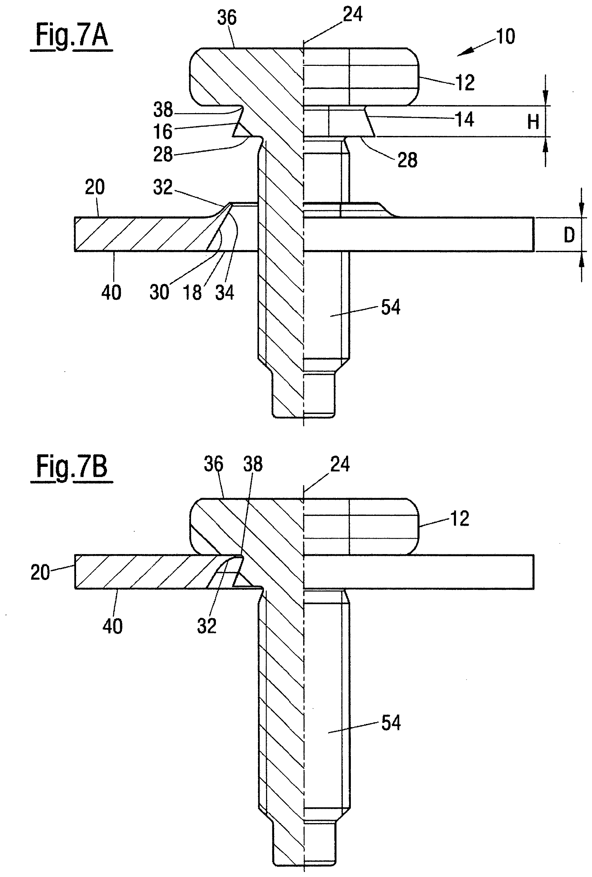

Das Einpresselement 10 könnte aber auch als Bolzenelement 10 realisiert werden, wie in den Fig. 6A bis 6C, 7A und 7B gezeigt ist. Dort ist das Einpresselement 10 mit einem Schaftteil 54 mit Außengewinde 44 versehen, das sich von der dem Kopfteil 12 abgewandten Seite 28 des Kragens 14 in Richtung der mittleren Längsachse 24 weg erstreckt. D.h., mit einem Schaftteil 54 mit Außengewinde 44 anstelle einer hohlen Passage mit Innengewinde 44. Ansonsten entspricht das Bolzenelement dem Mutterelement gemäß den Fig. 1A bis 1C. Die Blechvorbereitung gemäß Fig. 7A sowie die Einpresssituation gemäß Fig.7B entsprechen auch der Blechvorbereitung gemäß Fig. 2A und der Einbausituation gemäß Fig. 2B.

Es wäre durchaus möglich, die Auslegung des Bolzenelements 10 und die Blechvorbereitung anders auszulegen. Zum Beispiel könnte die Auslegung des Kopfteils 12 und des Kragens 14 des Bolzenelements 10 sowie die Blechvorbereitung und die Einbausituation den Beispielen gemäß Fig. 3A bis 3C bzw. 4A und 4D entsprechen. Als weiteres Beispiel könnte die Auslegung des Kopfteils 12 und des Kragens 14 des Bolzenelements sowie die Blechvorbereitung und die Einbausituation den Beispielen gemäß Fig. 1A bis 1C bzw. 5A und 5D entsprechen.

Egal, ob man mit einem Einpresselement 10 in Form eines Mutterelements oder in Form eines Bolzenelements arbeitet, ergibt sich ein Zusammenbauteil bestehend aus einem Einpresselement 10 in Kombination mit einer Tafel 20, insbesondere in Form eines Blechteils, wobei der im Querschnitt zumindest im Wesentlichen polygonale Kragen 14 sich seitlich verschiebbar in dem polygonalen Loch 18 der Tafel 20 befindet, wobei Tafelmaterial aus dem Randbereich des Loches 18 in den zwischen dem polygonalen Kragen 14 und der Unterseite des Kopfteils gebildeten Kerben 38 hineinerstreckt, aber auf den Grund der Kerben 38 nicht reicht, wobei die seitliche Verschiebbarkeit des Einpresselements 10 relativ zur Tafel 20 gewährleistet, aber eine axiale Trennung des Einpresselements 10 von der Tafel 20 aufgrund der Materialüberlappung des Tafelmaterials mit dem polygonalen Kragen 14 innerhalb der Kerben 38 unterbunden ist.

Bei dem Zusammenbauteil wird, wenn Verdrängungsflächen auf der Seite des Kopfteils vorgesehen und in das Tafelmaterial hinein gedrückt sind, Tafelmaterial aus dem Randbereich des polygonalen Loches 18 in die Kerben 38 verdrängt.

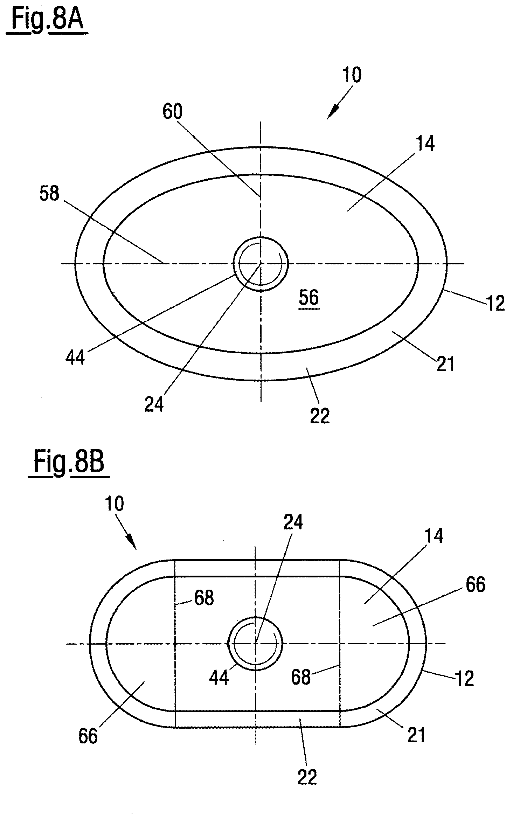

Bezug nehmend auf die Fig. 8A und 8B werden dort zwei verschiedene weitere Beispiele für nicht kreisrunde Querschnittsformen eines Kragens 14 und der jeweils zugeordneten Kopfteil 12 eines Einpresselements 10 gezeigt. Es versteht sich, dass die Querschnittsform des Loches des entsprechenden Bauteils (nicht gezeigt) komplementär zu der Querschnittsform des jeweiligen Kragens 14 gewählt ist.

In der Fig. 8A ist die Querschnittsform elliptisch 56 mit Hauptachse 58 und Nebenachse 60. In Fig. 8B ist die Querschnittsform eisbecherähnlich 62 mit einem mittleren, quadratischen oder rechteckigen Bereich 64 und halbkreisförmige Bereiche 66 an zwei entgegengesetzten imaginären Seiten 68 des mittleren Bereiches 64. In beiden Fällen weist das Kopfteil 12 des Einpresselements die gleiche Form wie der jeweilige Kragen 14, wobei die Ausdehnung des Kopfteils 12 größer als die des Kragens ist, um die Bauteilanlagefläche 21 an der Unterseite 22 des Kopfteils auszubilden.

Es wird nun ein selbststanzendes Verfahren zur Herstellung eines erfindungsgemäßen Zusammenbauteils erläutert und zwar anhand eines Einpresselements in der Form eines Mutterelements gemäß den Fig. 3A bis 3C. Das Mutterelement 10 hat hier einen Kragen 14 mit einer polygonalen Stanzform an der Unterseite 22 des Kopfteils 12 des Mutterelements 10. Das Maß zwischen dem Stanzbereich des Mutterelements an der freien Stirnseite 28 des Kragens 14 und der Unterseite 21 des Kopfteils 12 ist größer als die Materialdicke des Bauteils 20, in das das Mutterelement eingebracht wird. Die polygonale Form der Mutter stanzt ein für die Funktion erforderliches großes Loch mit Querabmessungen entsprechend denen des freien Stirnendes 28 des Kragens 14. Nach dem Stanzvorgang wird durch die Erhebungen bzw. Verdrängungsflächen 42, die sich an der Unterseite des Mutterelements 10 befinden, Blechmaterial zum Fließen gebracht. Dieses Material dient zum axialen Verriegeln des Mutterelements in das so gestanzte Loch 18, wie oben mehrfach erläutert. Da aber der Stanzbereich des Mutterelements 10 im "Freien" ist, kann die Mutter in x/y-Richtung verschoben werden. Eine bündige Verschraubung wäre jedoch alleine hierdurch noch nicht möglich, da der Kragen 14 des Mutterelements eine axiale Höhe aufweist, die größer ist als die Dicke des Bauteils 20.

Um hier Abhilfe zu schaffen, wird in diesem Beispiel eine Sicke 70 im Bauteil ausgebildet, wodurch den Überstand 72 des Stanzbereiches bzw. des Kragens der Mutter kompensiert und die Möglichkeit für eine bündige Verschraubung eines weiteren nicht gezeigten Bauteils an der Unterseite 40 des Bauteils 20 außerhalb der Sicke 70 gegeben ist.

Die Sicke 70 wird dadurch erzeugt, dass ein Niederhalter 82 des Setzkopfes 77 mit einer Ausnehmung 78 versehen wird deren Formgebung der der Sicke auf der Blechoberseite entspricht. Die Matrize 74 wird mit einem zylindrischen Vorsprung 75 versehen welche die Formgebung der Sicke 70 auf der Blechunterseite entspricht. Der Niederhalter 82 wird nach Federkraft nach unten vorgespannt und klemmt während des Schließens der Presse (nicht gezeigt) in der der Setzkopf 77 und die Matrize 74 eingebaut sind, als erstes das Blechteil 20 gegen der Matrize wodurch die Sicke 70 als erstes geformt wird. Bei zunehmendes Schließen der Presse wird der Stempel 80 nach unten gedrückt und presst das Einpresselement das sich im Stempelkanal innerhalb des Miederhalters und unterhalb des Stempels befindet, gegen das Blechteil und stanzt so ein Stanzbutzen aus dem Blechteil in etwa in der Mitte der Sicke 70. Während der Einstanzbewegung weicht der Niederhalter 82 gegen die Federvorspannung sozusagen relativ zum Stempel 80 zurück.

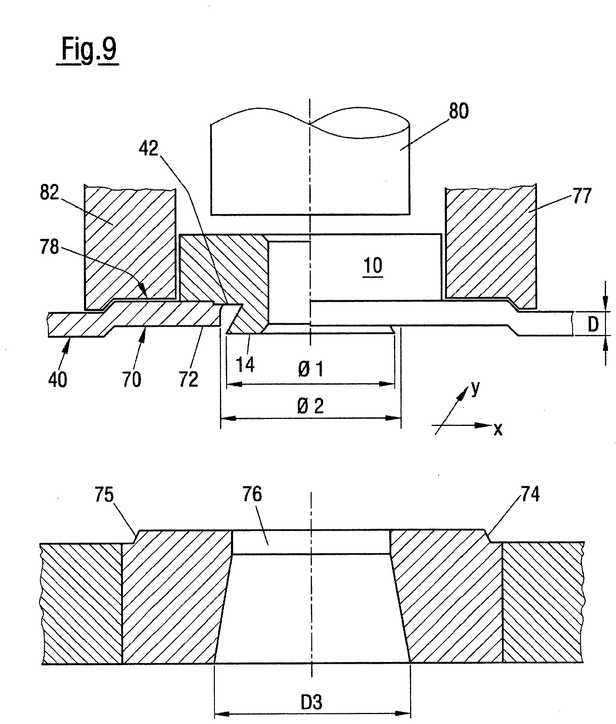

Fig. 9 zeigt die Situation, nachdem die Mutter eingesetzt ist und das Zusammenbauteil innerhalb der Presse angehoben ist, jedoch vor der Entfernung aus der Presse.

Das hier beschriebene Verfahren zur Herstellung eines Zusammenbauteils kann zusammengefasst, so betrachtet werden, dass ein Setz- bzw. Stanzkopf 77, der an sich gut bekannt ist und von dem nur einige Bauteile in der Fig. 9 gezeigt ist verwendet wird um das Einpresselement 10 selbststanzend in ein Bauteil 20 einzubringen. Zu diesem Zweck wird durch die Ausübung von Druck durch einen Stempel 80 des Setzkopfes 77 auf den Kopfteil 12 des Einpresselements 10 und bei gleichzeitiger Abstützung des Bauteils 20 auf einer Lochmatrize 74 mit einer nicht kreisrunden mittleren Öffnung 76, die freie Stirnseite 28 des Kragens 14 benutzt, um ein nicht kreisrundes Loch 18 mit einer Formgebung entsprechend die freie Stirnseite 28 des Einpresselements 10 in das Bauteil 20 zu stanzen.

Besonders günstig ist es, wenn das nicht kreisrunde Loch 76 der Matrize mit Querabmessungen Φ2 versehen wird, die etwas größer gewählt werden, als die entsprechenden Querabmessungen Φ1 der freien Stirnseite 28 des Kragens 14. Hierdurch werden die entsprechenden Seitenwände des so gestanzten Loches 18 des Bauteils 20 in Richtung der mittleren Längsachse 24 des Einpresselements 10 und in Richtung vom Kopfteil 12 weg zumindest im dem Kopfteil 12 abgewandten Bereich divergierend ausgebildet.

Mit anderen Worten erfolgt die sich nach unten divergierende Lochung 18 unter Anwendung eines Lochstempels (mit der freien Stirnseite 28 des Kragens 14) in Kombination mit einer Lochmatrize 74 mit einer Öffnung 76 größeren Querabmessungen. Eine solche Auslegung führt dazu, dass der Lochstempel (die freie Stirnseite 28 des Kragens 14) im Anfangsbereich der Lochung 18 ein glattwandiges Loch (mit Wänden parallel zur mittleren Längsachse 24) schneidet und anschließend ein Stanzbutzen (nicht gezeigt) divergierender Gestalt aus der restlichen Dicke des Blechteils 20 herausbricht, wobei der maximale Durchmesser des Stanzbutzens durch den Durchmesser des Loches Φ2 der Lochmatrize 74 bestimmt wird. Der Grad des Divergierens des Stanzbutzens wird durch die Blechdicke, den Querabmessungen der freien Stirnseite 28 des Kragens 14 und den Querabmessungen der Öffnung76 der Matrize bestimmt. Hierdurch kann der Verschiebeweg des Einpresselements im Bauteil 20 vergrößert werden, welche vom Vorteil ist.

### Bezugszeichenliste

- 10: Einpresselement
- 12: Kopfteil
- 14: Kragen
- 16: Außenflächen des Kragens 14
- 18: polygonales Loch
- 20: Tafel, Bauteil bzw. Blechteil
- 21: Bauteil- bzw. Blechteilanlagefläche
- 22: Unterseite des Kopfteils 12,
- 24: mittlere Längsachse des Einpresselements
- 26: gerundete Ecken des Kragens 14
- 28: freie Stirnseite des Kragens 14
- 30: Seitenflächen des Loches 18
- 32: Lippe am Rande des Loches 18, bzw. erhobener Randbereich
- 32': Lippe resultierend vom Flachpressen der Lippe 32
- 34: innere Flanke der Lippe 32
- 36: obere Stirnseite des Kopfteils 12
- 38: Kerben
- 39: Grund der Kerben
- 40: Unterseite des Bauteils bzw. des Blechteils 20
- 41: Freiraum
- 42: Verdrängungsflächen am Kopfteil 12
- 44: Innengewinde, Außengewinde, Gewindezylinder
- 46: Oberseite des Blechteils 20
- 48: Matrize
- 50: ringförmige Erhebung der Matrize 48
- 52: Ringvertiefung
- 54: Schaftteil
- 56: elliptische Querschnittsform
- 58: Hauptachse der Ellipse
- 60: Nebenachse der Ellipse
- 62: Eisbecher ähnliche Querschnittsform
- 64: mittlerer Bereich der eisbecherähnlichen Querschnittsform
- 66: halbkreisförmige Bereiche des mittleren Bereiches 64
- 68: imaginäre Seiten des mittleren Bereiches 64
- 70: Sicke
- 72: Überstand
- 74: Lochmatrize
- 75: zylindrischer Vorsprung der Lochmatrize 74
- 76: das Loch bzw. die Öffnung der Lochmatrize 74
- 77: Setzkopf
- 78: zylindrische Vertiefung der Stirnseite des Setzkopfes
- 80: Stempel des Setzkopfes
- 82: Niederhalter des Setzkopfes 77
- β: Winkel
- H: axiale Höhe des Kragens 14
- D: Dicke der Tafel 20
- α: Winkela
- Φ1: Querabmessung des nicht kreisrunden Kragens 14 am freien Stirnende 28
- Φ1: Querabmessung des nicht kreisrunden Loches 76 der Lochmatrize

## Patentansprüche

1. Zusammenbauteil bestehend aus einem Bauteil (20), insbesondere einem Blechteil, und einem am Bauteil angebrachten als Verschiebeelement ausgebildeten Element (10), das ein Kopfteil (12), eine an einer Stirnseite (22) des Kopfteils (12) vorgesehene Bauteilanlagefläche (21) und einen sich innerhalb der Bauteilanlagefläche angeordneten und von dieser wegragenden Kragen (14) aufweist, der eine Querschnittsform hat, der nicht kreisrund ist,
**dadurch gekennzeichnet, dass** der Kragen (14) mit Spiel in ein komplementär zur Querschnittsform geformtes Loch (18) des Bauteils (20) eingesetzt ist, dass der Kragen (14) Außenflächen aufweist, die in Richtung der genannten Stirnseite (22) des Kopfteils und in Bezug auf die mittlere Längsachse des Elements schräg zulaufen und mit dieser einen spitzen Winkel (α) bilden, dass der der Bauteilanlagefläche benachbarte Randbereich des Loches des Bauteils in zwischen dem Kragen (14) und der Stirnseite (22) des Kopfteils (12) ausgebildeten Kerben (38) hineinerstreckt, aber auf den Grund (39) der Kerben (38) nicht reicht, wobei ein Freiraum (41) entsteht, der eine seitliche Verschiebbarkeit des Elements relativ zum Bauteil (20) gewährleistet, und dass eine axiale Trennung des Elements (10) von dem Bauteil (20) aufgrund von Materialüberlappung des Bauteilmaterials mit dem Kragen (14) innerhalb der Kerben (38) unterbunden ist.

2. Zusammenbauteil nach Anspruch 1,
**dadurch gekennzeichnet, dass** der Kragen (14) eine zumindest im Wesentlichen polygonale Querschnittsform aufweist, wobei die polygonale Querschnittsform des Kragens (14) und dementsprechend das polygonale Loch (18) des Bauteils (20) aus der Gruppe dreieckig, quadratisch, fünfeckig und hexagonal ausgewählt ist.

3. Zusammenbauteil nach Anspruch 1,
**dadurch gekennzeichnet, dass** der Kragen (14) eine ovale bzw. elliptische Querschnittsform aufweist oder eine eisbecherähnliche Querschnittsform.

4. Zusammenbauteil nach einem der vorhergehenden Ansprüche,
**dadurch gekennzeichnet, dass** die axiale Höhe (H) des Kragens der axialen Dicke (D) des Bauteils (20) im Bereich der Anbringung des Elements (10) vorzugsweise nicht übersteigt.

5. Zusammenbauteil nach einem der vorhergehenden Ansprüche,
**dadurch gekennzeichnet, dass** der spitze Winkel α im Bereich von etwa 20° bis etwa 40° liegt.

6. Zusammenbauteil nach einem der vorhergehenden Ansprüche,
**dadurch gekennzeichnet, dass** auch das Kopfteil (12) im Querschnitt polygonal oder elliptisch ist.

7. Zusammenbauteil nach zumindest einem der vorstehenden Ansprüche,
**dadurch gekennzeichnet, dass** die dem Kragen (14) zugewandte Stirnseite (22) des Kopfteils mindestens an den Stellen der Seitenflächen (16) des Kragens (14) vorstehende Verdrängungsflächen (42) aufweist, die zum Verdrängen von Bauteilmaterial im Randbereich des Loches (18) vorgesehen sind, wobei das verdrängte Bauteilmaterial Nasen bildet, die nach Innen in die zwischen den Seitenflächen (16) des Kragens (14) und der genannten Stirnseite (22) des Kopfteils (12) bzw. den Verdrängungsflächen (42) gebildeten Kerben (38) ragen und durch radiale Überlappung die axiale Trennung des Elements (10) und dem Bauteil (20) verhindern.

8. Zusammenbauteil nach zumindest einem der vorhergehenden Ansprüche,
**dadurch gekennzeichnet, dass** es entweder als Mutterelement ausgebildet ist und eine mittlere Längspassage aufweist oder als Bolzenelement mit einem vom Kragen (14) aus in Richtung vom Kopfteil (12) weg erstreckenden Schaftteil (54).

9. Zusammenbauteil nach Anspruch 7,
**dadurch gekennzeichnet, dass** die genannte Bauteilanlagefläche (21) des Kopfteils (12) in einer Ebene senkrecht zur mittleren Längsachse (24) des Elements (10) liegt.

10. Zusammenbauteil nach mindestens einem der vorstehenden Ansprüche,
**dadurch gekennzeichnet, dass** eine Ringvertiefung (52) in der der Bauteilanlagefläche (21) des Kopfteils (12) abgewandten Seite (40) des Bauteils (20) um das Loch (18) herum vorgesehen ist, oder dass diskrete Vertiefungen, die in einem Ring in der der genannten Bauteilanlagefläche des Kopfteils abgewandten Seite des Bauteils um das Loch (18) herum angeordnet sind, vorgesehen sind und mindestens mit verantwortlich für die Verdrängung des Bauteilmaterials in die Kerben (38) ist bzw. sind.

11. Verfahren zur Herstellung eines Zusammenbauteils nach einem der vorhergehenden Patentansprüche 1 bis 10,
**dadurch gekennzeichnet, dass** ein nicht kreisrundes Loch (18) in das Bauteil (20) vorgefertigt wird mit Querabmessungen größer als die entsprechenden maximalen Querabmessungen des Kragens (14) im Bereich seiner freien Stirnseite (28), damit dieser in das nicht kreisrunde Loch (18) hineingeführt werden kann, dass Bauteilmaterial aus dem Randbereich des nicht kreisrunden Loches (18) in die sich zwischen den Seitenflächen (16) des Kragens (14) und der Bauteilanlagefläche (21) des Kopfteils ausgebildeten Kerben (38) verdrängt wird; wobei das Bauteilmaterial nicht soweit verdrängt wird, dass es auf den Grund (39) der Kerben (38) reicht, wobei die seitliche Verschiebbarkeit des Elements (10) relativ zum Bauteil (20) gewährleistet ist, aber nur so weit, dass eine axiale Trennung dass Elements (10) von dem Bauteil (20) aufgrund der Materialüberlappung des Bauteilmaterials mit dem nicht kreisrunden Kragen (14) innerhalb der Kerben (38) unterbunden ist.

12. Verfahren nach dem Anspruch 11,
**dadurch gekennzeichnet, dass** das vorgefertigte nicht kreisrunde Loch (18) des Bauteils (20) mit einem erhobenen Randbereich (32) auf der der Bauteilanlagefläche (16) des Kopfteils (12) zugewandte Seite (46) versehen ist, und beim Einführen des Kragens (14) in das Bauteil (20) der erhobene Randbereich (32) durch die Bauteilanlagefläche (21) des Kopfteils bei gleichzeitiger Abstützung der dem Kopfteil abgewandten Seite des Bauteils (20) flachgepresst wird, um hierdurch das Verdrängen des Bauteilmaterials im Randbereich zu bewirken.

13. Verfahren nach Anspruch 11,
**dadurch gekennzeichnet, dass** der Randbereich des vorgefertigten nicht kreisförmigen Lochs (18) des Bauteils (20), die im Bereich der Anbringung in einer Ebene liegt, mittels Verdrängungsflächen (42), die an der Bauteilanlagefläche (21) des Kopfteils mindestens im Bereich der Seitenflächen (16) des Kragens (14) vorgesehen sind, beim Einführen des Kragens (14) in das Bauteil (20) bei gleichzeitiger Abstützung der Unterseite (40) des Bauteils eingedrückt wird, um hierdurch das Verdrängen des Bauteilmaterials im Randbereich des nicht kreisrunden Loches (18) zu bewirken.

14. Verfahren nach Anspruch 11,
**dadurch gekennzeichnet, dass** mittels einer Matrize (48), die mit einer Ringerhebung (50) oder mit diskreten in einem Ring angeordneten Vorsprüngen versehen ist, die der Bauteilanlagefläche (21) des Kopfteils (12) abgewandte Seite des Bauteils (20) um das nicht kreisrunde Loch (18) herum mit einer Ringvertiefung (52) bzw. mit diskreten Vertiefungen, die in einem Ring angeordnet sind, versehen wird, die für die Verdrängung des Bauteilmaterials in die Kerben (38) verantwortlich ist bzw. sind.

15. Verfahren zur Herstellung eines Zusammenbauteils nach mindestens einem der vorstehenden Patentansprüche 1 bis 10 wobei durch die Ausübung von Druck auf den Kopfteil (12) des Elements und bei gleichzeitiger Abstützung des Bauteils (20) auf einer Lochmatrize (74) mit einer nicht kreisrunden mittleren Öffnung, die freie Stirnseite (28) des im Querschnitt nicht kreisrunden Kragens (14) benutzt wird, um ein nicht kreisrundes Loch (18) in das Bauteil (20) zu stanzen.

16. Verfahren nach Anspruch 15,
**dadurch gekennzeichnet, dass** das nicht kreisrunde Loch (74) der Matrize mit Querabmessungen etwas größer als die entsprechenden Querabmessungen der freien Stirnseite (28) des Kragens (14) versehen wird, damit die entstehenden Seitenwänden des so gestanzten Loches (18) des Bauteils (20) in Richtung der mittleren Längsachse (24) des Elements (10) und in Richtung vom Kopfteil (12) weg zumindest im dem Kopfteil (12) abgewandten Bereich divergierend ausgebildet sind.

## Claims

1. A component assembly comprising a component (20), in particular a sheet metal part, and an element (10) formed as an alignment element attached to the component, the element (10) having a head part (12), a component contact surface (21) provided at one end face (22) of the head part (12) and a collar (14) arranged inside the component contact surface and projecting away from it, the collar (14) having a cross-sectional shape which is not circular,
**characterized in that** the collar (14) is inserted with clearance in an aperture (18) of the component (20) shaped complementary to the cross-sectional shape, **in that** the collar (14) has outer surfaces which converge in the direction towards said end face (22) of the head part and with respect to the central longitudinal axis of the element and form an acute angle (α) with the latter, **in that** the marginal region of the aperture of the component adjacent to the component contact surface extends into recesses (38) formed between the collar (14) and the end face (22) of the head part (12) but does not extend to the base (39) of the recesses (38), with a free space (41) arising which ensures a lateral displaceability of the element relative to the component (20), and **in that** an axial separation of the element (10) from the component (20) is prevented by material overlap of the component material with the collar (14) within the recesses (38).

2. A component assembly in accordance with claim 1,
**characterized in that** the collar (14) has an at least substantially polygonal cross-sectional shape, with the polygonal cross-sectional shape of the collar (14) and accordingly the polygonal aperture (18) of the component (20) being selected from the group triangular, square, pentagonal and hexagonal.

3. A component assembly in accordance with claim 1,
**characterized in that** the collar (14) has an oval or elliptical cross-sectional shape or a cross-sectional shape resembling an ice cream container.

4. A component assembly in accordance with any one of the preceding claims, **characterized in that** the axial height (H) of the collar preferably does not exceed the axial thickness (D) of the component (20) in the region of the attachment of the element (10).

5. A component assembly in accordance with any one of the preceding claims, **characterized in that** the acute angle α lies in the range from about 20° to about 40°.

6. A component assembly in accordance with any one of the preceding claims, **characterized in that** the head part (12) is also polygonal or elliptical in cross-section.

7. A component assembly in accordance with at least one of the preceding claims,
**characterized in that** the end face (22) of the head part adjacent the collar (14) has projecting displacement surfaces (42) at least at the positions of the side surfaces (16) of the collar (14) that are provided to displace component material in the marginal region of the aperture (18), with the displaced component material forming noses which project inwardly into the recesses (38) formed between the side surfaces (16) of the collar (14) and said end face (22) of the head part (12) or the displacement surfaces (42) and prevent the axial separation of the element (10) and the component (20) by radial overlap.

8. A component assembly in accordance with at least one of the preceding claims,
**characterized in that** it is either formed as a nut element and has a central longitudinal passage or is formed as a bolt element with a shaft part (54) projecting away from the collar (14) in the direction away from the head part (12).

9. A component assembly in accordance with claim 7,
**characterized in that** said component contact surface (21) of the head part (12) lies in a plane perpendicular to the central longitudinal axis (24) of the element (10).

10. A component assembly in accordance with any one of the preceding claims, **characterized in that** a ring recess (52) is provided in the side (40) of the component (20) remote from the component contact surface (21) of the head part (12) around the aperture (18), or **in that** discrete recesses are provided which are arranged in a ring in the side of the component remote from said component contact surface of the head part and is or are at least co-responsible for the displacement of the component material into the recesses (38).

11. A method of manufacturing a component assembly in accordance with any one of the preceding claims 1 to 10,
**characterized in that** a non-circular aperture (18) is pre-formed in the component (20) with transverse dimensions larger than the corresponding maximum transverse dimensions of the collar (14) in the region of its free end face (28) so that the collar (14) can be introduced into the non-circular aperture (18), **in that** component material is displaced from the marginal region of the non-circular aperture (18) into the recesses (38) formed between the side surfaces (16) of the collar (14) and the component contact surface (21) of the head part, with the component material not being displaced sufficiently far that it extends to the base (39) of the recesses (38), whereby the lateral alignment movement of the element (10) relative to the component (20) is ensured, but extends only sufficiently far that an axial separation of the element (10) from the component (20) is prevented as a result of the material overlap of the component material with the non-circular collar (14) inside the recesses (38).

12. A method in accordance with claim 11,
**characterized in that** the preformed non-circular aperture (18) of the component (20) is provided with a raised marginal region (32) at the side (46) confronting the component contact surface (21) of the head part (12) and the raised marginal region (32) is pressed flat on introducing the collar (14) into the component (20) by the component contact surface (21) of the head part, while the side of the component (20) remote from the head part is simultaneously supported in order to hereby bring about the displacement of the component material in the marginal region.

13. A method in accordance with claim 11,
**characterized in that** the marginal region of the preformed non-circular aperture (18) of the component (20) which lies in one plane in the region of the attachment is impressed by means of displacement surfaces (42) which are provided at the component contact surface (21) of the head part, at least in the region of the side surfaces (16) of the collar (14) on introduction of the collar (14) into the component (20), with the underside (40) of the component being simultaneously supported, in order to hereby bring about the displacement of the component material in the marginal region of the non-circular aperture (18).

14. A method in accordance with claim 11,
**characterized in that**, by means of a die (48) which is provided with a raised ring (50) or with discrete projections arranged in a ring, a ring recess (52) or discrete recesses which are arranged in a ring is or are provided at the side of the component (20) remote from the component contact surface (21) of the head part (12) around the non-circular aperture (18) and is or are responsible for the displacement of the component material into the recesses (38).

15. A method for the manufacture of a component assembly in accordance with at least one of the preceding claims 1 to 10, wherein, by the exertion of pressure on the head part (12) of the element and with a simultaneous support of the component (20) on a die button (74) having a non-circular central aperture, the free end face (28) of the collar (14) which is non-circular in cross-section is used in order to punch a non-circular aperture (18) in the component (20).

16. A method in accordance with claim 15,
**characterized in that** the non-circular aperture (74) of the die button is provided with cross-sectional dimensions somewhat larger than the corresponding cross-sectional dimensions of the free end face (28) of the collar (14) so that the sidewalls of the so punched aperture (18) of the component (20) are divergent in the direction of the central longitudinal axis (24) of the element (10) and in the direction away from the head part (12) at least in the region remote from the head part (12).

## Revendications

1. Pièce d'assemblage composée d'un composant (20), en particulier d'une pièce en tôle, et d'un élément (10) monté sur le composant et conçu comme un élément de translation, qui présente une partie de tête (12), une surface d'appui de composant (21), prévue sur une face frontale (22) de la partie de tête (12), et une collerette (14) disposée à l'intérieur de la surface d'appui de composant, faisant saillie de celle-ci et ayant une forme de section transversale qui n'est pas circulaire,
**caractérisée en ce que** la collerette (14) est insérée avec jeu dans un trou (18) du composant (20) formé de façon complémentaire à la forme de la section transversale,
**en ce que** la collerette (14) présente des surfaces extérieures qui convergent en oblique en direction de ladite face frontale (22) de la partie de tête et par rapport à l'axe longitudinal central de l'élément et qui forment un angle aigu (α) avec celui-ci,
**en ce que** la zone de bordure du trou du composant, voisine de la surface d'appui de composant, s'étend jusque dans des encoches (38) ménagées entre la collerette (14) et la face frontale (22) de la partie de tête (12), mais n'atteint pas le fond (39) des encoches (38), ce qui crée un espace libre (41) qui assure une possibilité de translation latérale de l'élément par rapport au composant (20), et
**en ce qu'**une séparation axiale de l'élément (10) par rapport au composant (20) est empêchée en raison d'un chevauchement de matériau du matériau du composant avec la collerette (14) à l'intérieur des encoches (38).

2. Pièce d'assemblage selon la revendication 1,
**caractérisée en ce que** la collerette (14) présente une forme de section transversale au moins sensiblement polygonale, la forme de section transversale polygonale de la collerette (14) et, en conséquence, le trou polygonal (18) du composant (20) étant choisis dans le groupe constitué par les formes triangulaire, carrée, pentagonale et hexagonale.

3. Pièce d'assemblage selon la revendication 1,
**caractérisée en ce que** la collerette (14) présente une forme de section transversale ovale ou elliptique ou une forme de section transversale en forme de brise-glace.

4. Pièce d'assemblage selon l'une des revendications précédentes, **caractérisée en ce que** la hauteur axiale (H) de la collerette ne dépasse pas, de préférence, l'épaisseur axiale (D) du composant (20) dans la zone du montage de l'élément (10).

5. Pièce d'assemblage selon l'une des revendications précédentes, **caractérisée en ce que** l'angle aigu α est compris dans la plage d'environ 20° à environ 40°.

6. Pièce d'assemblage selon l'une des revendications précédentes, **caractérisée en ce que** la partie de tête (12) est également polygonale ou elliptique en section transversale.

7. Pièce d'assemblage selon l'une au moins des revendications précédentes, **caractérisée en ce que** la face frontale (22) de la partie de tête tournée vers la collerette (14) présente, au moins aux endroits des surfaces latérales (16) de la collerette (14), des surfaces de refoulement (42) en saillie, qui sont prévues pour refouler du matériau de composant dans la zone de bordure du trou (18), le matériau de composant refoulé formant des ergots qui pénètrent vers l'intérieur dans les encoches (38), formées entre les surfaces latérales (16) de la collerette (14) et ladite face frontale (22) de la partie de tête (12) ou les surfaces de refoulement (42), et qui empêchent par chevauchement radial la séparation axiale de l'élément (10) et du composant (20).

8. Pièce d'assemblage selon l'une au moins des revendications précédentes, **caractérisée en ce qu'**elle est réalisée soit comme un élément formant écrou et présente un passage longitudinal central, soit comme un élément formant boulon comprenant une partie de tige (54) qui s'étend à partir de la collerette (14) en éloignement de la partie de tête (12).

9. Pièce d'assemblage selon la revendication 7,
**caractérisée en ce que** ladite surface d'appui de composant (21) de la partie de tête (12) est située dans un plan perpendiculaire à l'axe longitudinal central (24) de l'élément (10).

10. Pièce d'assemblage selon l'une au moins des revendications précédentes, **caractérisée en ce qu'**il est prévu une cavité annulaire (52) autour du trou (18) dans la face (40) du composant (20) détournée de la surface d'appui de composant (21) de la partie de tête (12), ou il est prévu des cavités discrètes disposées en anneau autour du trou (18) dans la face du composant détournée de ladite surface d'appui de composant de la partie de tête, qui est ou sont au moins partiellement responsable(s) du refoulement du matériau de composant dans les encoches (38).

11. Procédé de fabrication d'une pièce d'assemblage selon l'une des revendications précédentes 1 à 10,
**caractérisé en ce qu'**un trou non circulaire (18) est préfabriqué dans le composant (20) avec des dimensions transversales supérieures aux dimensions transversales maximales correspondantes de la collerette (14) dans la zone de sa face frontale libre (28), pour que celle-ci puisse être introduite dans le trou non circulaire (18),
**en ce que** le matériau du composant est refoulé hors de la zone de bordure du trou non circulaire (18) jusque dans les encoches (38) ménagées entre les surfaces latérales (16) de la collerette (14) et la surface d'appui de composant (21) de la partie de tête ;
le matériau du composant n'étant pas refoulé au point d'atteindre le fond (39) des encoches (38), la possibilité de translation latérale de l'élément (10) par rapport au composant (20) étant assurée, mais seulement dans une mesure telle qu'une séparation axiale de l'élément (10) par rapport au composant (20) est empêchée en raison du chevauchement du matériau du composant avec la collerette non circulaire (14) à l'intérieur des encoches (38).

12. Procédé selon la revendication 11,
**caractérisé en ce que** le trou non circulaire préfabriqué (18) du composant (20) est pourvu d'une zone de bordure surélevée (32) sur la face (46) tournée vers la surface d'appui de composant (16) de la partie de tête (12), et lors de l'introduction de la collerette (14) dans le composant (20), la zone de bordure surélevée (32) est aplatie par la surface d'appui de composant (21) de la partie de tête tout en soutenant simultanément la face du composant (20) détournée la partie de tête, afin de provoquer ainsi le refoulement du matériau du composant dans la zone de bordure.

13. Procédé selon la revendication 11,
**caractérisé en ce que** lors de l'introduction de la collerette (14) dans le composant (20), la zone de bordure du trou non circulaire préfabriqué (18) du composant (20), qui se trouve dans un seul plan dans la zone de montage, est enfoncée au moyen de surfaces de refoulement (42) prévues sur la surface d'appui de composant (21) de la partie de tête au moins dans la zone des surfaces latérales (16) de la collerette (14), tout en soutenant simultanément la face inférieure (40) du composant, afin de provoquer ainsi le refoulement du matériau du composant dans la zone de bordure du trou non circulaire (18).

14. Procédé selon la revendication 11,
**caractérisé en ce que**, au moyen d'une matrice (48) pourvue d'une surélévation annulaire (50) ou de saillies discrètes disposées en anneau, la face du composant (20) détournée de la surface d'appui de composant (21) de la partie de tête (12) est pourvue, autour du trou non circulaire (18), d'une cavité annulaire (52) ou de cavités discrètes disposées en anneau, qui est ou sont responsable(s) du refoulement du matériau du composant dans les encoches (38).

15. Procédé de fabrication d'une pièce d'assemblage selon l'une au moins des revendications précédentes 1 à 10, dans lequel, en exerçant une pression sur la partie de tête (12) de l'élément tout en soutenant simultanément le composant (20) sur une matrice de perforation (74) ayant une ouverture centrale non circulaire, on utilise la face frontale libre (28) de la collerette (14) de section transversale non circulaire pour perforer un trou non circulaire (18) dans le composant (20).

16. Procédé selon la revendication 15,
**caractérisé en ce que** le trou non circulaire (74) de la matrice est pourvu de dimensions transversales légèrement supérieures aux dimensions transversales correspondantes de la face frontale libre (28) de la collerette (14), pour que les parois latérales résultantes du trou (18) ainsi perforé du composant (20) soient réalisées de manière à diverger en direction de l'axe longitudinal central (24) de l'élément (10) et en éloignement de la partie de tête (12), au moins dans la zone détournée de la partie de tête (12).
